# EUROPÄISCHE PATENTSCHRIFT

(11) **EP 1 529 790 B1**
(45) Veröffentlichungstag und Bekanntmachung des Hinweises auf die Patenterteilung: **14.04.2010**
(21) Anmeldenummer: 04024709.0
(22) Anmeldetag: 16.10.2004
(51) Int. Cl.: C08G 18/40

(54) **Polyurethanschaumstoffe, enthaltend Acrylatpolyole**
Polyurethane foams containing acrylate polyols
Mousses de polyuréthane contenant des polyols d'acrylate

(30) Priorität: 04.11.2003 DE 10352100
(43) Veröffentlichungstag der Anmeldung: 11.05.2005
(73) Patentinhaber: BASF SE, 67056 Ludwigshafen (DE)
(72) Erfinder: Kreyenschmidt, Martin Dr., 49393 Lohne (DE); Frericks, Ansgar, 49078 Osnabrück (DE); Binder, Horst, 68623 Lampertheim (DE)

(56) Entgegenhaltungen:
- EP-A- 1 247 827
- GB-A- 1 022 863
- US-A1- 2002 035 165

## Beschreibung

Die Erfindung betrifft Polyurethanschaumstoffe, die bevorzugt über einen breiten Temperaturbereich ein viskoelastisches Verhalten zeigen und ein geringes Quellverhalten in Wasser, sowie vorteilhaftes Alterungs- und Hydrolyseverhalten aufweisen, erhältlich durch Umsetzung von Polyisocyanaten mit Acrylatpolyolen, Polyetherpolyolen, wobei der Anteil an ethylenoxidreichen Polyetherpolyolen weniger als 35 Gew.-%, bezogen auf das Gesamtgewicht der Polyetherpolyole beträgt, und Polyolen mit einem Molekulargewicht von 400 bis 2499 g/mol.

Es ist bekannt, Acrylatpolyole in der Polyurethanchemie zu verwenden.
DE-A-101 10 553 beschreibt Polyurethanschaumstoffe mit einer Dichte von unter 100 g/l, die durch Umsetzung von Acrylatpolyolen mit Isocyanaten hergestellt wurden und gute mechanische Eigenschaften, insbesondere in Hinblick auf Härte, Dehnung und Zugfestigkeit aufweisen.

Die mechanischen Eigenschaften von Polyurethanschaumstoffen hängen im allgemeinen von der Umgebungsluftfeuchtigkeit und von der Wasseraufnahme des Schaumstoffs ab. Häufig nehmen die bekannten Polyurethanschaumstoffe größere Mengen Wasser auf und zeigen schlechte Hydrolysestabilität, vor allem unter feuchtwarmen Bedingungen.

US 2002/035165 offenbart viskoelastische Polyurethan Weichschaumstoffe, die jeweils 10 Gewichtsprozent Polyacrylate, bezogen auf das Gesamtgewicht der Polygonkomponenten, enthalten. Als Isocyanate werden aliphatische Isocyanate eingesetzt.

DE-A-101 10 553 offenbart die Herstellung von Polyurethan-Weichschaumstoffen, enthaltend Polyacrylate, auf Basis von aromatischen Di- und Polyisocyanaten. Dabei können sowohl elastische als auch viskoelastische Weichschaumstoffe in Raumgewichten unter 100 g pro Liter hergestellt werden. In den Beispielen wird die Herstellung von hoch elastischen Schaumstoffen auf Basis von MDI und von TDI-Schaumstoffen beschrieben. Ein Verfahren zur Herstellung von viskoelastischen PolyurethanSchaumstoffen wird nicht offenbart.

EP-A-1247827 offenbart die Herstellung von viskoelastischen Polyurethan Weichschaumstoffen auf Basis von aliphatischen Isocyanaten.

WO-A-02/070 579 offenbart die Herstellung von viskoclastischen Polyurethan-Weichschaumstoffen auf Basis von aromatischen Isocyanaten

Häufig ist die hohe Wasseraufnahme ein Problem bei Polyurethanschaumstoffen, die auf Basis von Hoch-EO-haltigen Polyetherpolyolen hergestellt werden. Derartige Polyetherole werden im allgemeinen zur Herstellung von viskoelastischen Schaumstoffen, wie sie beispielsweise in EP-A-331 941 und DE-A-199 24 803 beschrieben werden, verwendet. Diese viskoelastischen Schaumstoffe neigen bevorzugt zu einer starken Quellung, wobei unter Quellung eine Volumenzunahme bei Wasseraufnahme zu verstehen ist.

Aufgabe der Erfindung war es daher Polyurethanschaumstoffe bereit zu stellen, die einen großen Anwendungsbereich, ein geringeres Quellverhalten in Wasser und ein vorteilhaftes Alterungs- bzw. Hydrolyseverhalten aufweisen. Insbesondere war es die Aufgabe der Erfindung, viskoelastische Polyurethanschaumstoffe bereit zu stellen, die über einen sehr breiten Temperaturbereich ein viskoelastisches Verhalten zeigen und ein besseres Alterungs- bzw. Hydrolyseverhalten und geringeres Quellverhalten aufweisen als solche, hergestellt aus Hoch-EO-haltigen Polyetherpolyolen.

Die Aufgabe konnte durch den Einsatz einer speziellen Polyolkomponente, enthaltend langkettige Acrylatpolyole, langkettige Polyetherpolyole mit niedrigem Ethylenoxid-Gehalt und kurzkettige Polyole, gelöst werden.

Gegenstand der Erfindung ist daher ein Polyurethanschaumstoff, insbesondere ein hydrophober und viskoelastischer Polyurethanschaumstoff, erhältlich durch Umsetzung von aromatisch
a) Polyisocyanaten mit
b) Verbindungen mit gegenüber Isocyanaten reaktiven Wasserstoffatomen, umfassend die Komponenten
   b1) Acrylatpolyole mit einem zahlenmittleren Molekulargewicht von 1500 bis 15000 g/mol und einer Funktionalität von 1,7 bis 3 in einer Menge von 10 bis 60 Gew.-%, bezogen auf das Gesamtgewicht der Komponente b),
   b2) Polyetherpolyole mit einem zahlenmittleren Molekulargewicht von 2500 bis 8000 g/mol in einer Menge von 20 bis 60 Gew.-%, bezogen auf das Gesamtgewicht der Komponente b), wobei der Anteil an ethylenoxidreichen Polyetherpolyolen weniger als 35 Gew.-%, bezogen auf das Gesamtgewicht der Komponenten b2) beträgt, und
   b3) Polyole mit einem zahlenmittleren Molekulargewicht von 400 bis 2499 g/mol in einer Menge von 1 bis 35 Gew.-%, bezogen auf das Gesamtgewicht der Komponente b).

Unter Schaumstoff wird im Rahmen dieser Erfindung ein Werkstoff verstanden, mit über die gesamte Masse verteilte Zellen und einer Rohdichte, die niedriger als die Dichte der Gerüstsubstanz ist. Bevorzugt weisen die erfindungsgemäßen Schaumstoffe eine freigeschäumte Dichte von 15 bis 150 g/cm³ auf, besonders bevorzugt von 30 bis 100 g/cm³.

Dabei handelt es sich bei den erfindungsgemäßen Polyurethanschaumstoff um einen Polyurethanweichschaumstoff. Polyurethanweichschaumstoffe weisen bei Druckbeanspruchung einen relativ geringen Verformungswiderstand auf, d.h. die Druckspannung ist bei 10 % Stauchung nach DIN 53421 kleiner gleich 15 kPa.

Erfindungsgemäß handelt es sich bei dem erfindungsgemäßen Polyurethanschaumstoff um einen viskoelastischen Polyurethanschaumstoff. Unter Viskoelastizität ist ein Verhalten des Schaumstoffs auf Beanspruchung zu verstehen, das so aussieht wie die Kombination aus einem elastischen Feststoff und einer viskosen Flüssigkeit, wobei das Fließen von Zeit, Temperatur, Last und Belastungsgradient abhängt.

Im Rahmen dieser Erfindung wird ein Schaumstoff als viskoelastisch bezeichnet, wenn er im Torsionsschwingungsversuch nach DIN 53445 einen Verlustfaktor von mehr als 0,15, bevorzugt mehr als 0,2 aufweist. Es ist bevorzugt, dass die erfindungs gemäßen Schaumstoffe über einen breiten Temperaturbereich, d.h. von - 20°C bis + 50°C, zumindest aber von - 5 bis + 30°C, ein viskoelastisches Verhalten zeigen.

Ebenfalls kann der Schaumstoff als viskoelastisch bezeichnet werden, wenn er eine Rückprallelastizität, gemessen nach DIN EN ISO 8307, von weniger als 30 %, bevorzugt von 5 bis 25 %, besonders bevorzugt von 8 bis 22 % aufweist.

Insbesondere ist es bevorzugt, dass der erfindungsgemäße Schaumstoff sowohl die vorstehend angegebenen Kriterien für den Verlustfaktor als auch für die Rückprallelastizität erfüllt.

Bei den erfindungsgemäßen viskoelastischen Schaumstoffen mit vorstehend beschriebenen Dämpfungskoeffizienten handelt es sich um sogenannte "müde" Schaumstoffe.

Zu den für die Herstellung der erfindungsgemäßen Polyurethanschaumstoffe verwendeten Einsatzstoffen ist im einzelnen folgendes zu sagen:

Als Polyisocyanate a) eignen sich die an sich bekannten organischen aromatischen Polyisocyanate. In Betracht kommen beispielsweise arylaliphatische und aromatische mehrwertige Isocyanate. Verwendet werden können ferner modifizierte aromatische Polyisocyanate, beispielsweise mit Carbodiimidgruppen, Allophanatgruppen, Isocyanuratgruppen und/oder Urethangruppen aufweisende aromatische Polyisocyanate.

Bevorzugt werden die technisch gut zugänglichen, aromatischen Di- und Polyisocyanate wie 2,4- und 2,6-Toluylendiisocyanat, 2,2'- und 2,4'- und 4,4'-Diphenylmethandiisocyanat einzeln oder als Isomerengemisch, sowie Mischungen aus 2,2'- 2,4'-, 4,4'-Diphenylmethan-diisocyanaten und Polyphenyl-polymethylen-polyisocyanaten (Roh-MDI) verwendet. Die genannten Di- und Polyisocyanate können einzeln oder in Form von Mischungen eingesetzt werden.

Die Polyisocyanate a) (auch Isocyanatkomponente genannt) werden mit Verbindungen mit gegenüber Isocyanaten reaktiven Wasserstoffatomen b) (auch Polyolkomponente genannt) zur Umsetzung gebracht. Die Polyolkomponente b) erfasst erfindungsgemäß mindestens drei Bestandteile b1), b2) und b3).

Bezogen auf das Gesamtgewicht der Polyolkomponente b) enthält die Komponente b) 10 bis 60 Gew.-%, bevorzugt 20 bis 55 Gew.-%, mehr bevorzugt von 25 bis 50 Gew.-%, insbesondere 30 bis 45 Gew.-% Acrylatpolyole b1).

Die verwendeten Acrylatpolyole werden üblicherweise durch radikalische Polymerisation von hydroxyfunktionalisierten (Meth)acrylaten, bevorzugt durch Copolymerisation von hydroxyfunktionalisierten (Meth)acrylaten mit nicht hydroxyfunktionellen (Meth)acrylaten hergestellt. Weiterhin können sie auch durch Copolymerisation der genannten Acrylat-Monomeren mit anderen aliphatischen oder aromatischen, ethylenisch ungesättigten Monomeren, wie zum Beispiel Ethen, Propen, Buten, Isobuten, Diisobuten, Acrylnitril, Acrylamid, Acrolein, Styrol, Methylstyrol, Divinylbenzol, Maleinsäureanhydrid, Vinylester von Carbonsäuren oder ungesättigten Carbonsäuren, wie zum Beispiel Maleinsäure, Fumarsäure oder Crotonsäure oder deren Derivaten, hergestellt werden.

Derartige Copolymerisationen können in kontinuierlich oder diskontinuierlich betriebenen Reaktoren, beispielsweise Kesseln, Ringspaltreaktoren, Taylorreaktoren, Extrudern oder Rohrreaktoren, durchgeführt werden.

Bevorzugt werden Reaktionsbedingungen gewählt, die zu Polymeren mit geringen Verunreinigungen führen. So wird bei der Herstellung der erfindungsgemäß verwendeten Acrylatpolyole vorzugsweise ohne die Verwendung von Polymerisationsreglem gearbeitet.

Vorzugsweise wird bei der Herstellung der erfindungsgemäß verwendeten Acrylatpolyole bei Temperaturen oberhalb 120°C in Abwesenheit von Polymerisationsreglem und mit möglichst geringen Initiatorkonzentrationen polymerisiert.

Die zahlenmittleren Molekulargewichte (Mn) der erfindungsgemäß verwendeten Acrylatpolyole b1) liegen im allgemeinen zwischen 1500 bis 15000 g/mol, bevorzugt zwischen 3000 und 8000 g/mol und besonders bevorzugt zwischen 3000 und 5000 g/mol. Die eingesetzten Acrylatpolyole b1) weisen im allgemeinen eine mittlere Funktionalität von 1,7 bis 5, bevorzugt von 1,8 bis weniger als 4, besonders bevorzugt von 2 bis 3 auf.

Bevorzugt geeignet sind Homopolymerisate aus Hydroxyalkyl(meth)acrylaten oder Hydroxyalkylvinylethem oder Copolymerisate aus Hydroxyalkyl(meth)acrylaten oder Hydroxyalkylvinylethem mit nicht hydroxylfunktionellen (meth)acrylischen Monomeren. Insbesondere werden bei der Herstellung der erfindungsgemäß verwendeten Acrylatpolyole halogenfreie Monomere eingesetzt.

Die erfindungsgemäß verwendeten Acrylatpolyole werden insbesondere hergestellt durch radikalische Polymerisation von C1-bis C8-Hydroxyalkyl(meth)acrylaten, wie z.B. Hydroxyethyl(meth)acrylat, Hydroxypropyl(meth)acrylat, Hydroxybutyl(meth) acrylat.

Als acrylische Monomere ohne OH-Gruppen kommen die in DE-A-101 10 553 Absatz [0019] offenbarten Verbindungen in Betracht.

Die erfindungsgemäß verwendeten Acrylatpolyole werden vorzugsweise durch Copolymerisation von C1-bis C8-Hydroxyalkyl(meth)acrylaten mit den oben beschriebenen nicht OH-funktionellen (meth)acrylischen Monomeren hergestellt, wobei die Kombination unterschiedlicher Hydroxyalkyl(meth)acrylate mit den nichtfunktionellen (Meth)-acrylaten beliebig möglich ist.

In einer vorteilhaften Ausführungsform werden die Acrylatpolyole durch Copolymerisation von C₁- bis C₈-Hydroxyalkyl(meth)acrylaten mit Alkyl(meth)acrylaten mit C₁- bis C₁₀-Alkylgruppen hergestellt.

In einer besonders bevorzugten Ausführungsform werden Acrylatpolyole mit überwiegend primären OH-Gruppen eingesetzt. Bevorzugt beträgt der Anteil primäre zu sekundäre OH-Gruppen 60 zu 40 bis 100 zu 0, bevorzugt etwa 75 zu 25. Diese werden bevorzugt aus OH-funktionellen Acrylaten oder Vinylethern, wie 2-Hydroxyethylacrylat (HEA), 4-Butandiolmonoacrylat (BDMA) oder Vinyl-4-hydroxybutylether (HBVE) und n-Butylacrylat (n-BA) als nicht OH-funktionelles Comonomer copolymerisiert. Diese Ausführungsform eignet sich insbesondere zur Herstellung von Polyurethanformweichschaumstoffen, beispielsweise Autositze oder Autoteppiche.

In einer weiteren besonders bevorzugten Ausführungsform werden Acrylatpolyole mit überwiegend sekundären OH-Gruppen eingesetzt. Bevorzugt beträgt der Anteil sekundäre zu primäre OH-Gruppen 60 zu 40 bis 100 zu 0, bevorzugt etwa 75 zu 25. Beispielsweise wird 1,2-Propandiolmonoacrylat (HPA), welches eine Isomerenverteilung mit ca. 25 % prim. und 75 % sek. OH-Gruppen aufweist, mit n-Butylacrylat copolymerisiert. Diese Ausführungsform eignet sich insbesondere zur Herstellung von Polyurethanblockweichschaumstoffen, beispielsweise Matratzen oder Polster.

Bezogen auf das Gesamtgewicht der Polyolkomponente b) enthält die Komponente b) 20 bis 60 Gew.-%, bevorzugt 31 bis 55 Gew.-%, insbesondere 35 bis 50 Gew.-% Polyetherpolyole b2).

Die zahlenmittleren Molekulargewichte (Mn) der erfindungsgemäß verwendeten Polyetherpolyole b2) liegen im allgemeinen zwischen 2500 bis 8000 g/mol, bevorzugt zwischen 2600 und 6000 g/mol und besonders bevorzugt zwischen 2800 und 5500 g/mol. Die eingesetzten Polyetherpolyole b2) weisen im allgemeinen eine mittlere Funktionalität von 2 bis 5, bevorzugt von 2 bis 4, besonders bevorzugt von 2 bis 3 auf.

Die als Komponente b2) eingesetzten Polyetherpolyole werden im allgemeinen nach bekannten Verfahren, beispielsweise durch anionische Polymerisation mit Alkalihydroxiden oder Alkalialkoholaten als Katalysatoren und unter Zusatz mindestens eines Startermoleküls, aus einem oder mehreren Alkylenoxiden mit 2 bis 4 Kohlenstoffatomen im Alkylenrest hergestellt. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden.

Es ist ein wesentliches Merkmal der vorliegenden Erfindung, dass der Anteil an ethylenoxidreichen Polyetherpolyolen weniger als 35 Gew.-%, bevorzugt weniger als 30 Gew.-%, mehr bevorzugt weniger als 25 Gew.-%, besonders bevorzugt weniger als 20 Gew.%, insbesondere weniger als 15 Gew.-%, bezogen auf das Gesamtgewicht der Komponenten b2), beträgt.

Unter ethylenoxidreichen Polyetherpolyolen werden Polyetherpolyole verstanden, die einen Gehalt an Ethylenoxid von 40 Gew.-% oder mehr, bevorzugt von 50 Gew.-% oder mehr, bezogen auf das Gesamtgewicht der zur Herstellung der Polyetherpolyole eingesetzten Alkylenoxide, aufweisen.

Als H-funktionelle Startermoleküle kommen üblicherweise mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiol, dreiwertige Alkohole, beispielsweise Glycerin oder Trimethylolpropan, sowie höherwertige Alkohole, wie Pentaerythrit.

Weiterhin können als Polyetherpolyole b2) sogenannte niedrig ungesättigte Polyetherpolyole verwendet werden, d.h. mit einem Gehalt an ungesättigten Verbindungen von kleiner als 0,02 me/g, bevorzugt kleiner als 0,01 me/g. Derartige Polyetheralkohole werden zumeist durch Anlagerung von Alkylenoxiden, insbesondere Ethylenoxid, Propylenoxid und Mischungen daraus, an die oben beschriebenen Startermoleküle in Gegenwart von Doppelmetallcyanidkatalysatoren (DMC-Katalysatoren) hergestellt.

Bezogen auf das Gesamtgewicht der Polyolkomponente b) enthält die Komponente b) 1 bis 35 Gew.-%, bevorzugt 5 bis 30 Gew.-%, insbesondere 10 bis 25 Gew.-% sogenannte kurzkettige Polyole b3).

Die zahlenmittleren Molekulargewichte (Mn) der erfindungsgemäß verwendeten kurzkettigen Polyole b3) liegen im allgemeinen zwischen 400 bis 2499 g/mol, bevorzugt zwischen 450 und 2000 g/mol. Die eingesetzten Polyole b3) weisen im allgemeinen eine mittlere Funktionalität von 2 bis 5, bevorzugt von 2 bis 4, besonders bevorzugt von 2 bis 3 auf.

Als Komponente b3) können die üblichen, aus dem Stand der Technik bekannten Polyole eingesetzt werden, beispielsweise Polypropylenglykole, Polyethylenglykole, Polyesterole, Acrylatpolyole oder Gemische daraus. Bevorzugt werden Polypropylenglykole und/oder Polyethylenglykole verwendet.

Die Polyolkomponente b) kann neben den erfindungswesentlichen Bestandteilen b1) bis b3) bevorzugt noch Acrylatpolyole als Vernetzerpolyole b4) und Kettenverlängerungsmittel b5) umfassen.

Acrylatpolyole als Vernetzerpolyole b4) haben eine Funktionalität von mindestens 4, bevorzugt von 4 bis 6 und werden in einer Menge von 0,1 bis 5 Gew.-%, bevorzugt von 0,2 bis 3 Gew.-%, besonders bevorzugt von 0,3 bis 2,8 Gew.-%, bezogen auf das Gesamtgewicht der Komponente b), eingesetzt.

Kettenverlängerungsmittel b5) werden in einer Menge von 0,1 bis 8 Gew.-%, bevorzugt 0,5 bis 6, besonders bevorzugt 1 bis 5 Gew.-%, bezogen auf das Gesamtgewicht der Komponente b) eingesetzt.

Als Kettenverlängerungsmittel werden vorzugsweise 2- und 3-funktionelle Alkohole mit Molekulargewichten unter 400 g/mol, insbesondere im Bereich von 60 bis 150 g/mol, verwendet. Beispiele sind Ethylenglykol, Propylenglykol, Diethylenglykol, Dipropylenglykol, Butandiol-1,4, Hexandiol-1,6, Neopentylglykol, Glycerin, Trimethylolpropan oder Gemische daraus.

Bei der Umsetzung zum erfindungsgemäßen Polyurethanschaumstoffe können ferner optional Kettenregler als Komponente b6) zum Einsatz kommen. Solche Kettenregler sind Verbindungen, die lediglich eine gegenüber Isocyanaten reaktive funktionelle Gruppe aufweisen, wie z. B. monofunktionelle Alkohole wie beispielsweise 1-Butanol, monofunktionelle Amine und/oder monofunktionelle Polyole. Geeignete Beispiele für Kettenregler sind ferner in DE-A-197 44 747 beschrieben.

Bevorzugt weisen die Kettenregler ein Molekulargewicht von 31 bis 499 auf. Die Kettenregler können im allgemeinen in einer Menge von 0,1 bis 15 Gew.-Teile, bevorzugt 2 bis 12 Gew.-Teile, besonders bevorzugt 5 bis 10 Gew.-Teile, bezogen auf 00 Gew.-Teile der gesamten Komponente b), eingesetzt werden.

Zur Herstellung der erfindungsgemäßen Schaumstoffe können weitere Einsatzstoffe, insbesondere Katalysatoren, Treibmittel sowie Hilfs- und/oder Zusatzstoffe mitverendet werden, zu denen im einzelnen folgendes zu sagen ist:

Als Katalysatoren für die Herstellung der erfindungsgemäßen Polyurethan-Schaumstoffe werden die üblichen und bekannten Polyurethanbildungskatalysatoren eingesetzt, beispielsweise organische Zinnverbindungen, und/oder basische Amine wie Diazabicyclooctan. Die Katalysatoren werden vorzugsweise in einer Menge von 0,01 bis 10 Gew.-%, vorzugsweise 0,05 bis 5 Gew.-%, eingesetzt.

Als Treibmittel zur Herstellung der Polyurethan-Schaumstoffe wird bevorzugt Wasser eingesetzt. Gemeinsam mit oder an Stelle von Wasser können auch physikalisch wirkende Treibmittel, beispielsweise Kohlendioxid, Kohlenwasserstoffe, wie n-, iso- oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 und 15 Gew.-%, insbesondere 1 und 10 Gew.-%, die Menge an Wasser vorzugsweise im Bereich zwischen 0,5 und 10 Gew.-%, insbesondere 1 und 5 Gew.-%.

Als Hilfsmittel und/oder Zusatzstoffe werden beispielsweise oberflächenaktive Substanzen, Schaumstabilisatoren, Zellregler, äußere und innere Trennmittel, Füllstoffe, Flammschutzmittel, Pigmente, Hydrolyseschutzmittel sowie fungistatisch und bakteriostatisch wirkende Substanzen eingesetzt.

Gegenstand der Erfindung ist ferner ein Verfahren zur Herstellung eines Polyurethanschaumstoffs durch Umsetzung von
a) aromatischen Polyisocyanaten mit
b) Verbindungen mit gegenüber Isocyanaten reaktiven Wasserstoffatomen, umfassend die Komponenten
   b1) Acrylatpolyole mit einem zahlenmittleren Molekulargewicht von 1500 bis 15000 g/mol und einer Funktionalität von 1,7 bis 3 in einer Menge von 20 bis 60 Gew.-%, bezogen auf das Gesamtgewicht der Komponente b),
   b2) Polyetherpolyole mit einem zahlenmittleren Molekulargewicht von 2500 bis 8000 g/mol in einer Menge von 20 bis 60 Gew.-%, bezogen auf das Gesamtgewicht der Komponente b), wobei der Anteil an ethylenoxidreichen Polyetherpolyolen weniger als 35 Gew.-%, bezogen auf das Gesamtgewicht der Komponenten b2) beträgt, und
   b3) Polyole mit einem zahlenmittleren Molekulargewicht von 400 bis 2499 g/mol in einer Menge von 1 bis 35 Gew.-%, bezogen auf das Gesamtgewicht der Komponente b).

Zur Herstellung der erfindungsgemäßen Polyurethane werden die organischen Polyisocyanate a) mit den Verbindungen mit mindestens zwei aktiven Wasserstoffatomen b) sowie die genannten Treibmittel, Katalysatoren und Hilfs- und/oder Zusatzstoffe zur Reaktion gebracht.

Bei der Herstellung der erfindungsgemäßen Polyurethane werden Isocyanat- und Polyolkomponente üblicherweise in einer solchen Menge zusammengebracht, dass das Äquivalenzverhältnis von Isocyanatgruppen zur Summe der aktiven Wasserstoffatome 0,6 : 1 bis 1 : 1,4, vorzugsweise 0,7 : 1 bis 1 :1,2 beträgt.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem eine Polyol- und eine Isocyanatkomponente hergestellt und verschäumt werden. Die Komponenten werden vorzugsweise bei einer Temperatur im Bereich zwischen 15 bis 120°C, vorzugsweise 20 bis 80°C vermischt und in das Formwerkzeug beziehungsweise auf die Bandstraße gebracht. Die Temperatur im Formwerkzeug liegt zumeist im Bereich zwischen 15 und 120°C, vorzugsweise zwischen 30 und 80°C.

In einer möglichen Ausführungsform werden dazu die Polyisocyanate a) als Isocyanatkomponente zugegeben, und die Komponente b), umfassend die Bestandteile b1) bis b3) und gegebenenfalls b4) und b5), sowie gegebenenfalls die oben genannten Treibmittel, Katalysatoren und Hilfs- und/oder Zusatzstoffe als Polyolkomponenten zugegeben.

In einer weiteren mögliche Ausführungsform werden die Polyisocyanate a) in Form von Polyisocyanatprepolymeren zugegeben. Dazu werden die Polyisocyanate a) mit der kompletten oder teilweisen Menge einer oder mehrerer der Komponenten b1) bis b3) und gegebenenfalls b4) bis b6) zu Polyisocyanatprepolymeren umgesetzt. Die Herstellung der Prepolymere erfolgt auf aus dem Stand der Technik bekannte Weise, beispielweise indem das Polyisocyanat a) bei Temperaturen von etwa 80°C, mit Teilen der Komponente b) zum Prepolymer umgesetzt werden. Das Polyol-Polyisocyanat-Verhältnis wird so gewählt, dass der NCO-Gehalt des Prepolymeren 10 bis 29 Gew.-%, vorzugsweise 15 bis 25 Gew.-%, beträgt.

In einer bevorzugten Ausführungsform werden die Komponenten b1) und/oder b3) zur Herstellung des Polyisocyanatprepolymers verwendet.
Im allgemeinen wird von der Komponente b1) 10 bis 90 Gew.-%, bevorzugt 20 bis 60 Gew.-% zur Herstellung des Polyisocyanatprepolymeren verwendet. Ferner wird im allgemeinen von der Komponente b3) 10 bis 90 Gew.-%, bevorzugt 20 bis 60 Gew.-% zur Herstellung des Polyisocyanatprepolymeren verwendet.

Gegenstand der Erfindung ist weiterhin die Verwendung von Acrylatpolyolen zur Herstellung von viscoelastischen Polyurethan-Weichschaumstoffen. Zur Definition der Begriffe Viskoelastizität und Weichschaumstoff wird auf vorstehend gemachte Aussagen verwiesen.

Insbesondere ist Gegenstand der Erfindung die Verwendung von Acrylatpolyolen zur Herstellung von Polyurethanschaumstoffen, die von -20°C bis + 50°C viskoelastisches Verhalten zeigen.

Dabei führt die erfindungsgemäße Verwendung von Acrylatpolyolen somit zu Polyurethanschaumstoffen, die einen Verlustfaktor von mehr als 0,15, bevorzugt mehr als 0,2, im Torsionsschwingungsversuch nach DIN 53445 aufweisen. Ferner führt die erfindungsgemäße Verwendung von Acrylatpolyolen somit zu Polyurethanschaumstoffen, die eine Rückprallelastizität, gemessen nach DIN EN ISO 8307, von weniger als 30 %, bevorzugt von 5 bis 25 %, besonders bevorzugt von 8 bis 22 % aufweisten

In einer bevorzugten Ausführungsform erfolgt die erfindungsgemäße Verwendung von Acrylatpolyolen zusammen mit Polyetherpolyolen, wobei der Anteil an ethylenoxidreichen Polyetherpolyolen weniger als 35 Gew.-%, bezogen auf das Gesamtgewicht des Polyetherpolyols b2) beträgt.

In einer mehr bevorzugten Ausführungsform erfolgt die erfindungsgemäße Verwendung von Acrylatpolyolen b1) zusammen mit Polyetherpolyolen mit einem Molekulargewicht von 2500 bis 8000 g/mol, wobei der Anteil an ethylenoxidreichen Polyetherpolyolen weniger als 35 Gew.-%, bezogen auf das Gesamtgewicht der Komponenten b2) beträgt, und mit b3) Polyole mit einem Molekulargewicht von 400 bis 2499.

Durch die Verwendung von Acrylatpolyolen, bevorzugt zusammen mit Polyetherpolyolen, wobei der Anteil an ethylenoxidreichen Polyetherpolyolen weniger als 35 Gew.-%, bezogen auf das Gesamtgewicht des Polyetherpolyols b2) beträgt, zur Herstellung von viscoelastischen Polyurethan-Weichschaumstoffen erhält man hydrophobe Schaumstoffe, die über einen sehr breiten Temperaturbereich ein viskoelastisches Verhalten zeigen und zudem ein sehr geringes Quellverhalten in Wasser bei besserem Alterungs- und Hydrolyseverhalten aufweisen.

Die vorliegende Erfindung soll durch nachfolgende Beispiele veranschaulicht werden.

### Beispiel 1

### (Vergleichssystem: Geringe Hydrolysestabilität und starkes Quellverhalten):

Zur Herstellung eines Polyurethan-Weichschaums wurden von 600 g einer Polyolkomponente aus 76,47 Gew.-Teilen Lupranol® 2047, 1,96 Gew.-Teilen Lupranol® 2095, 15,66 Gew.-Teilen Lupranol® 1000, 2,94 Gew.-Teilen Wasser, 0,39 Gew.-Teilen Lupragen® N 201 (BASF Aktiengesellschaft), 0,15 Gew.-Teilen Lupragen® N 206 (BASF Aktiengesellschaft), 2,45 Gew.-Teilen Tegostab® B 8409 (Goldschmidt AG) mit 300 g einer Isocyanatkomponente aus 20 Gew.-Teilen

MDI, Elastogran GmbH) und aus 80 Gew.-Teilen Lupranat® MI, Elastogran GmbH) bei einem Index von 0,93 vermischt und das aufschäumende Gemisch in eine auf 53°C temperierte Aluminiumform mit den Maßen 40 cm x 40 cm x 10 cm gegeben. Die Dichte des Schaumstoffes betrug 48 g/cm³. Der resultierende Schaum enthielt ungealtert keine nachweisbaren Mengen MDA und nach Feucht-Wärme-Lagerung 326 ppm 2,4'-MDA und 110 ppm 4,4'-MDA. Die Stauchhärte (40 %) beträgt im ungealterten Zustand 2,0 kPa und nach Feucht-Wärme-Lagerung nimmt sie ab auf 1,2 kPa. Die Rückprallelastizität beträgt im ungealterten Zustand 11 % und nach Feucht-Wärme-Lagerung nimmt sie ab auf 6 %. Ein Probekörper der Maße 100 mg * 100 mm * 50 mm quillt in Leitungswasser, was sich an einer Volumenzunahme von 53 % in 6 Stunden bei Raumtemperatur bemerkbar macht.

### Beispiel 2

### (Viskoelastizität, Viskoelastizität über breiten Temperaturverlauf und bessere Hydrolysestabilität):

Zur Herstellung eines Polyurethan-Blockweichschaums wurden 428 g einer Polyolkomponente aus 42,62 Gew.-Teilen eines Acrylatpolyols (Funktionalität F = 2,5, OH-Zahl = 29 mg KOH/g, Monomerzusammensetzung: 6,8 Gew.-% Hydroxypropylacrylat und 93,2 Gew.-% n-Butylacrylat), 49,01 Gew.-Teilen Lupranol^{®} VP 9343, und 4,26 Gew.-Teilen Lupranol^{®} 2047 der Elastogran GmbH, 2,66 Gew.-Teilen Wasser, 0,53 Gew.-Teilen Tegostab^{®} BF 2370 und 0,05 Gew.-Teilen Kosmos^{®} 29 der Goldschmidt AG, 0,64 Gew.-Teilen Lupragen^{®} N 201 und 0,21 Gew.-Teilen Lupragen^{®} N 206 der BASF Aktiengesellschaft mit 222 g einer Isocyanatkomponente, bestehend aus 15,88 Gew.-Teilen Lupranat^{®} M 20 W (Polymer-MDI, Elastogran GmbH), 25,25 Gew.-Teilen Lupranat^{®} MI (Elastogran GmbH) und 58,87 Gew.-Teile eines Prepolymers mit einem NCO-Gehalt von 15,20 %, hergestellt aus 35 Gew.-Teilen Lupranol^{®} 1200, 64,99 Gew.-Teilen Lupranat^{®} MI (Elastogran GmbH), sowie 0,01 Gew.-Teilen Diethylenglykol-bis-chlorformiat bei einem Index von 0,78 vermischt und das aufschäumende Gemisch in eine oben offene Pappschachtel mit den Ausmaßen 22 cm x 22 cm x 22 cm gegeben.

Die Dichte des Schaumstoffes betrug 48 g/cm³. Der resultierende Schaum enthielt ungealtert keine nachweisbaren Mengen MDA und nach Feucht-Wärme-Lagerung 110 ppm 2,4'-MDA und 34 ppm 4,4'-MDA. Die Stauchhärte (40 %) beträgt im ungealterten Zustand 3,4 kPa und nach Feucht-Wärme-Lagerung bleibt sie bei 3,4 kPa. Die Rückprallelastizität beträgt im ungealterten Zustand 21 % und nach Feucht-Wärme-Lagerung nimmt sie lediglich ab auf 20 %. Eine Rückprallelastizität von 21 % und ein Verlustfaktor tan delta von 0,21 bei 25°C belegen, dass es sich um einen viskoelastischen Schaumstoff handelt. Selbst bei einer Temperatur von 66°C liegt noch ein Verlustfaktor tan delta von 0,20 vor, was zeigt, dass über einen breiten Temperaturverlauf ein viskoelastisches Verhalten vorliegt. Die mechanischen Eigenschaften nehmen bei der Feucht-Wärme-Lagerung deutlich weniger ab. Es wird deutlich weniger von den durch Hydrolyse entstehenden Abbauprodukten 2,4'- und 4,4'-MDA gebildet.

### Beispiel 3

### (Viskoelastizität und deutlich besseres Quellverhalten):

Zur Herstellung eines Polyurethan-Blockweichschaums wurden 572,7 g einer Polyolkomponente aus 42,48 Gew.-Teilen Acrylatpolyol (Funktionalität F = 2,6, OH-Zahl = 29 mg KOH/g, Monomerzusammensetzung: 6,8 Gew.-% Hydroxypropylacrylat und 93,2 Gew.-% n-Butylacrylat), 10,62 Gew.-Teilen Acrylatpolyol (Funktionalität F = 2,4, OH-Zahl = 64 mg KOH/g, Monomerzusammensetzung: 16 Gew.-% Butandiolmonoacrylat und 84 Gew.-% n-Butylacrylat), 28,67 Gew.-Teile Lupranol^{®} VP 9343, 8,5 Gew.-Teile Lupranol^{®} 2047 und 7,43 Gew.-Teile Lupranol^{®} 1000 der Elastogran GmbH, 1,49 Gew.-Teile Wasser, 0,32 Gew.-Teile Tegostab^{®} BF 2370 der Goldschmidt AG, 0,21 Gew.-Teile Lupragen^{®} N 201 und 0,29 Gew.-Teile Lupragen^{®} N 206 der BASF Aktiengesellschaft mit 227,3 g einer Isocyanatkomponente aus 15,69 Gew.-Teilen Lupranat^{®} M 20 W (Polymer-MDI, Elastogran GmbH) und aus 84,31 Gew.-Teilen eines Prepolymers mit einem NCO-Gehalt von 20,10 %, hergestellt aus 25,6 Gew.-Teilen Lupranol^{®} 1200, 74,39 Gew.-Teilen Lupranat^{®} MI (Elastogran GmbH), sowie 0,01 Gew.-Teilen Diethylenglykol-bis-chlorformiat bei einem Index von 0,89 vermischt und das aufschäumende Gemisch in eine oben offene Pappschachtel mit den Ausmaßen 22 cm x 22 cm x 22 cm gegeben.

Die Dichte des Schaumstoffes betrug 64 g/cm³. Eine Rückprallelastizität von 19 % und ein Verlustfaktor tan delta von 0,20 bei 25 °C belegen, dass es sich um einen viskoelastischen Schaumstoff handelt. Ein Probekörper der Maße 100 mg * 100 mm * 50 mm quillt nicht in Leitungswasser, was sich an einer nur minimalen Volumenzunahme von 4 % in 6 Stunden bei Raumtemperatur bemerkbar macht

### Beispiel 4

### (Vergleichssystem: Größere Härte bei tiefen Temperaturen und größere Zunahme der Rückprallelastizität bei höheren Temperaturen: Viskoelastisches Verhalten über engen Temperaturbereich):

Zur Herstellung eines Polyurethan-Weichschaums wurden von 700,3 g einer Polyolkomponente aus 76,47 Gew.-Teilen Lupranol^{®} 2047, 1,96 Gew.-Teilen Lupranol^{®} 2095, 15,66 Gew.-Teilen Lupranol^{®} 1000, 2,94 Gew.-Teilen Wasser, 0,39 Gew.-Teilen Lupragen^{®} N 201 (BASF AG), 0,15 Gew.-Teilen Lupragen^{®} N 206 (BASF Aktiengesellschaft), 2,45 Gew.-Teilen Tegostab^{®} B 8409 (Goldschmidt AG) mit 349,7 g einer Isocyanatkomponente aus 20 Gew.-Teilen Lupranat^{®} M 20 W (Polymer-MDI, Elastogran GmbH) und aus 80 Gew.-Teilen Lupranat^{®} MI, Elastogran GmbH) bei einem Index von 0,93 vermischt und das aufschäumende Gemisch in eine auf 53°C temperierte Aluminiumform mit den Maßen 40 cm x 40 cm x 10 cm gegeben.

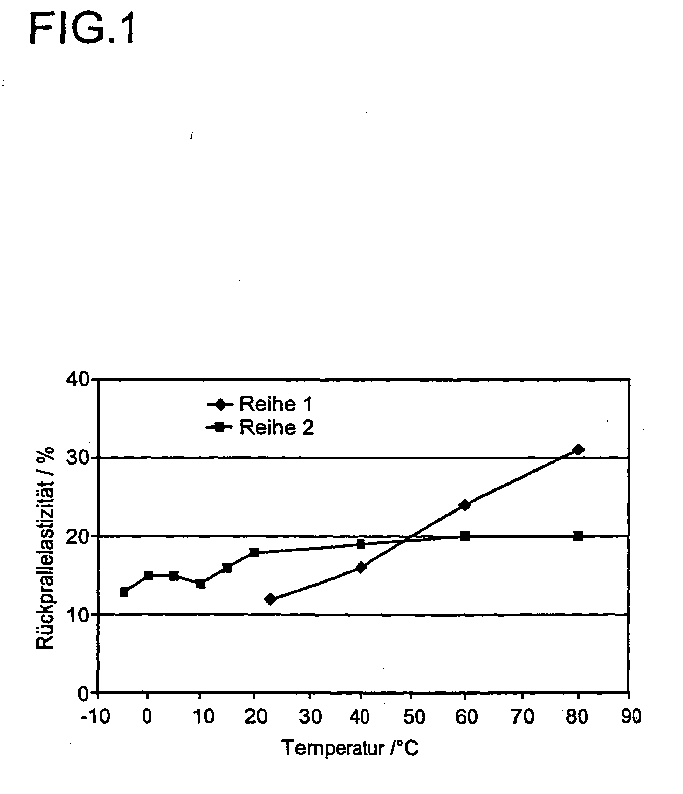

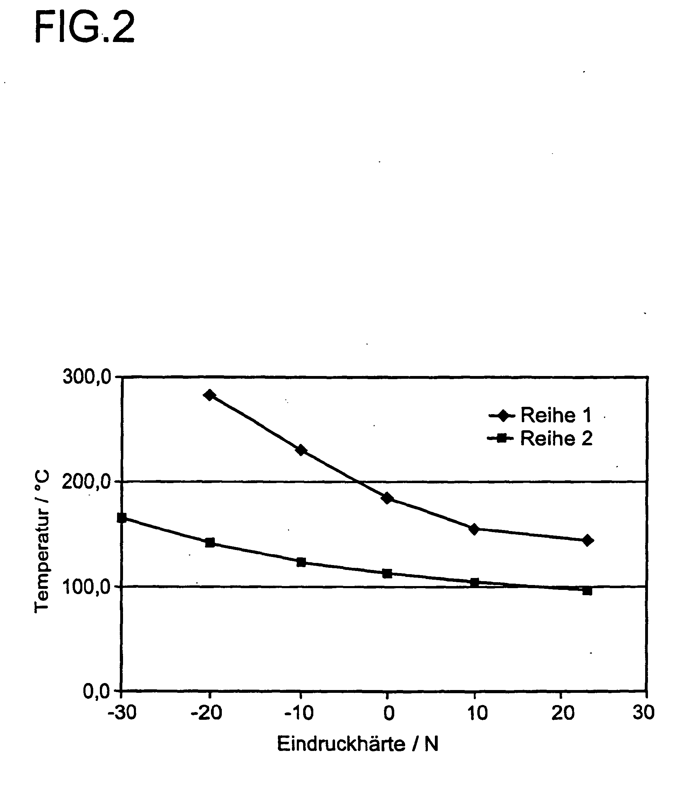

Die Dichte des Schaumstoffes betrug 57 g/cm³. Die Rückprallelastizität ist unterhalb von 23°C nicht mehr bestimmbar. Von 23°C bis 80°C nimmt die Rückprallelastizität, bestimmt nach DIN EN ISO 8307 von 12 % auf 31 % zu, was einer prozentualen Zunahme von 158 % entspricht (siehe Tabelle 1 und Reihe 1 in Figur 1). Beim Abkühlen von 23°C auf bis -20°C ist eine starke Härtezunahme, gemessen als Eindruckhärte nach DIN EN ISO 2439Nerfahren C, von 143,2 N auf 283,4 N zu beobachten. Es entspricht einer Zunahme von 98 %. Bei - 30°C liegt die Probe im gefrorenen Zustand vor (siehe Tabelle 2 und Reihe 1 in Figur 2).

**Tabelle 1**

| Temperatur / °C | Rückprallelastizität / % |
|---|---|
| 80 | 31 |
| 60 | 24 |
| 40 | 16 |
| 23 | 12 |

**Tabelle 2**

| Temperatur / °C | Eindruckhärte / N |
|---|---|
| 23 | 143,2 |
| 10 | 154,7 |
| 0 | 184,6 |
| -10 | 230,1 |
| -20 | 283,4 |
| -30 | gefroren |

### Beispiel 5

### (Geringere Härte bei tiefen Temperaturen und geringe Zunahme der Rückprallelastizität bei höheren Temperaturen: Viskoelastisches Verhalten über breiten Temperaturbereich):

Zur Herstellung eines Polyurethan-Blockweichschaums wurden 1383,7 g einer Polyolkomponente aus 38,68 Gew.-Teilen Acrylatpolyol (Funktionalität F = 2,5, OH-Zahl = 32 mg KOH/g, Monomerzusammensetzung: 7,5 Gew.-% Hydroxypropylacrylat und 92,5 Gew.-% n-Butylacrylat), 40,62 Gew.-Teilen Lupranol^{®} VP 9343, 7,74 Gew.-Teilen Lupranol^{®} 2047 und 9,67 Gew.-Teilen Lupranol^{®} 1200 der Elastogran GmbH, 2,42 Gew.-Teilen Wasser, 0,48 Gew.-Teilen Tegostab^{®} BF 2370 der Goldschmidt AG, 0,29 Gew.-Teilen Lupragen^{®} N 201 und 0,10 Gew.-Teilen Lupragen^{®} N 206 der BASF Aktiengesellschaft mit 516,3 g einer Isocyanatkomponente aus 20 Gew.-Teilen Lupranat^{®} M 20 W (Polymer-MDI, Elastogran GmbH) und aus 84,31 Gew.-Teilen Lupranat^{®} MI (Elastogran GmbH), bei einem Index von 0,80 vermischt und das aufschäumende Gemisch in eine oben offene Aluminiumkiste mit den Ausmaßen 40 cm x 40 cm x 40 cm gegeben.

Die Dichte des Schaumstoffes betrug 44 g/cm³. Die Rückprallelastizität ist sogar bei - 5°C noch bestimmbar. Der Wert liegt bei 13 %. Von - 5 °C bis 80 °C nimmt die Rückprallelastizität, bestimmt nach DIN EN ISO 8307 von 13 % auf 20 % zu, was einer prozentualen Zunahme von lediglich 54 % entspricht (siehe Tabelle 3 und Reihe 2 in Figur 1). Beim Abkühlen von 23°C auf - 30°C ist eine nur geringe Härtezunahme, gemessen als Eindruckhärte nach DIN EN ISO 2439Nerfahren C, von 95,4 N auf 166,7 N beobachtet worden. Es entspricht einer Zunahme von 75 %. Selbst bei - 30°C liegt die Probe nicht im gefrorenen Zustand vor (siehe Tabelle 4 und Reihe 2 in Figur 2). Die Eindruckhärte bei - 30°C ist mit 166,7 N geringer als bei der Vergleichsprobe (Beispiel 4) bei 0°C mit 184,6 N. Hieran kann ein viskoelastisches Verhalten über einen deutlich breiteren Temperaturbereich gezeigt werden.

**Tabelle 3**

| Temperatur / °C | Rückpralielastizität / % |
|---|---|
| 80 | 20 |
| 60 | 20 |
| 40 | 19 |
| 20 | 18 |
| 15 | 16 |
| 10 | 14 |
| 5 | 15 |
| 0 | 15 |
| -5 | 13 |

**Tabelle 4**

| Temperatur / °C | Eindruckhärte / N |
|---|---|
| 23 | 95,4 |
| 10 | 103,1 |
| 0 | 112,4 |
| -10 | 123,7 |
| -20 | 142,2 |
| -30 | 166,7 |

### Beispiel 6

Zur Herstellung eines Polyurethan-Blockweichschaums wurden 628 g einer Polyolkomponente aus 48,57 Gew.-Teilen Acrylatpolyol (Funktionalität F = 2,5, OH-Zahl = 31 mg KOH/g, Monomerzusammensetzung: 8 Gew.-% Butandiolmonoacrylat und 92 Gew.-% n-Butylacrylat), 34,00 Gew.-Teile Lupranol® 2080, 14,57 Gew.-Teile Lupranol® VP 9347 der Elastogran GmbH, 1,95 Gew.-Teile Wasser, 0,39 Gew.-Teile Tegostab® BF 2370 und 0,24 Gew.-Teilen Kosmos® 29 der Goldschmidt AG, 0,19 Gew.-Teile Lupragen® N 201 und 0,10 Gew.-Teile Lupragen® N 206 der BASF Aktiengesellschaft mit 172 g einer Isocyanatkomponente aus 100 Gew.-Teilen Lupranat® T 80 der Elastogran GmbH bei einem Index von 0,90 vermischt und das aufschäumende Gemisch in eine oben offene Pappschachtel mit den Ausmaßen 22 cm x 22 cm x 22 cm gegeben.

Die Dichte des Schaumstoffes betrug 43 g/cm³. Die Stauchhärte (40 %) beträgt 1,8 kPa. Eine Rückprallelastizität von 23 % und ein Verlustfaktor tan delta von 0,20 bei 25°C belegen, dass es sich um einen viskoelastischen Schaumstoff handelt.

## Patentansprüche

1. Viscoelastischer Polyurethan-Weichschaumstoff mit einem Verlustfaktor im Torsionsschwingungsversuch nach DIN 53445 von mehr als 0,15, erhältlich durch Umsetzung von
a) aromatischen Polyisocyanaten mit
b) Verbindungen mit gegenüber Isocyanaten reaktiven Wasserstoffatomen, umfassend die Komponenten
b1) Acrylatpolyole mit einem zahlenmittleren Molekulargewicht von 1500 bis 15000 g/mol und einer Funktionalität von 1,7 bis 3 in einer Menge von 10 bis 60 Gew.-%, bezogen auf das Gesamtgewicht der Komponente b),
b2) Polyetherpolyole mit einem zahlenmittleren Molekulargewicht von 2500 bis 8000 g/mol in einer Menge von 20 bis 60 Gew.-%, bezogen auf das Gesamtgewicht der Komponente b), wobei der Anteil an ethylenoxidreichen Polyetherpolyolen weniger als 35 Gew.-%, bezogen auf das Gesamtgewicht der Komponenten b2) beträgt, und
b3) Polyole mit einem zahlenmittleren Molekulargewicht von 400 bis 2499 g/mol in einer Menge von 1 bis 35 Gew.-%, bezogen auf das Gesamtgewicht der Komponente b).

2. Polyurethanschaumstoff nach Anspruch 1, **dadurch gekennzeichnet, dass** die Komponente b) zusätzlich die Komponente
b4) Acrylatpolyole als Vernetzerpolyole mit einer Funktionalität von mindestens 4 in einer Menge von 0,1 bis 5 Gew.-%, bezogen auf das Gesamtgewicht der Komponente b), umfasst.

3. Polyurethanschaumstoff nach Anspruch 1 oder 2, **dadurch gekennzeichnet, dass** die Komponente b) zusätzlich die Komponente
b5) Kettenverlängerungsmittel in einer Menge von 0,1 bis 8 Gew.-%, bezogen auf das Gesamtgewicht der Komponente b), umfasst.

4. Polyurethanschaumstoff nach einem der Ansprüche 1 bis 3, **dadurch gekennzeichnet, dass** es sich um einen Formweichschaumstoff handelt und dass es sich bei den OH-Gruppen der Acrylatpolyole b1) um überwiegend primäre OH-Gruppen handelt.

5. Polyurethanschaumstoff nach einem der Ansprüche 1 bis 3, **dadurch gekennzeichnet, dass** es sich um einen Blockweichschaumstoff handelt und dass es sich bei den OH-Gruppen der Acrylatpolyole b1) um überwiegend sekundäre OH-Gruppen handelt.

6. Verfahren zur Herstellung eines viscoelastischen Polyurethan-Weichschaumstoffs mit einem Verlustfaktor im Torsionsschwingungsversuch nach DIN 53445 von mehr als 0,15 durch Umsetzung von
a) aromatischen Polyisocyanaten mit
b) Verbindungen mit gegenüber Isocyanaten reaktiven Wasserstoffatomen, umfassend die Komponenten
b1) Acrylatpolyole mit einem zahlenmittleren Molekulargewicht von 1500 bis 15000 g/mol und einer Funktionalität von 1,7 bis 3 in einer Menge von 10 bis 60 Gew.-%, bezogen auf das Gesamtgewicht der Komponente b),
b2) Polyetherpolyole mit einem zahlenmittleren Molekulargewicht von 2500 bis 8000 g/mol in einer Menge von 20 bis 60 Gew.-%, bezogen auf das Gesamtgewicht der Komponente b), wobei der Anteil an ethylenoxidreichen Polyetherpolyolen weniger als 35 Gew.-%, bezogen auf das Gesamtgewicht der Komponenten b2) beträgt, und
b3) Polyole mit einem zahlenmittleren Molekulargewicht von 400 bis 2499 in einer Menge von 1 bis 35 Gew.-%, bezogen auf das Gesamtgewicht der Komponente b).

7. Verwendung von Acrylatpolyolen zur Herstellung von viscoelastischen Polyurethan-Weichschaumstoffen auf Basis von aromatischen Polyisocyanaten, **dadurch gekennzeichnet, dass** der Polyurethanschaumstoff von -20°C bis 50°C viskoelastisches Verhalten zeigt.

8. Verwendung von Acrylatpolyolen nach Anspruch 7, **dadurch gekennzeichnet, dass** die Polyurethanschaumstoffe einen Verlustfaktor von mehr als 0,2, im Torsionsschwingungsversuch nach DIN 53 445 aufweisen.

## Claims

1. A viscoelastic flexible polyurethane foam having a loss factor in the torsion pendulum test to DIN 53445 of more than 0.15, obtainable by reacting
a) aromatic polyisocyanates with
b) compounds having hydrogen atoms reactive toward isocyanates, comprising the components
b1) acrylate polyols having a number-average molecular weight of from 1500 to 15 000 g/mol and a functionality of from 1.7 to 3 in an amount of from 10 to 60% by weight, based on the total weight of component b),
b2) polyether polyols having a number-average molecular weight of from 2500 to 8000 g/mol in an amount of from 20 to 60% by weight, based on the total weight of component b), the proportion of ethylene oxide-rich polyether polyols being less than 35% by weight, based on the total weight of components b2), and
b3) polyols having a number-average molecular weight of from 400 to 2499 g/mol in an amount of from 1 to 35% by weight, based on the total weight of component b).

2. The polyurethane foam according to claim 1, wherein component b) additionally comprises the component
b4) acrylate polyols as crosslinker polyols having a functionality of at least 4 in an amount of from 0.1 to 5% by weight, based on the total weight of component b).

3. The polyurethane foam according to claim 1 or 2, wherein component b) additionally comprises the component
b5) chain-extending agents in an amount of from 0.1 to 8% by weight, based on the total weight of component b).

4. The polyurethane foam according to any of claims 1 to 3, which is a molded flexible foam and wherein the OH groups of the acrylate polyols b1) are predominantly primary OH groups.

5. The polyurethane foam according to any of claims 1 to 3, which is a slabstock flexible foam and wherein the OH groups of the acrylate polyols b1) are predominantly secondary OH groups.

6. A process for producing a viscoelastic flexible polyurethane foam having a loss factor in the torsion pendulum test to DIN 53445 of more than 0.15 by reacting
a) aromatic polyisocyanates with
b) compounds having hydrogen atoms reactive toward isocyanates, comprising the components
b1) acrylate polyols having a number-average molecular weight of from 1500 to 15 000 g/mol and a functionality of from 1.7 to 3 in an amount of from 10 to 60% by weight, based on the total weight of component b),
b2) polyether polyols having a number-average molecular weight of from 2500 to 8000 g/mol in an amount of from 20 to 60% by weight, based on the total weight of component b), the proportion of ethylene oxide-rich polyether polyols being less than 35% by weight, based on the total weight of components b2), and
b3) polyols having a number-average molecular weight of from 400 to 2499 in an amount of from 1 to 35% by weight, based on the total weight of component b).

7. The use of acrylate polyols for producing viscoelastic flexible polyurethane foams based on aromatic polyisocyanates, wherein the polyurethane foam exhibits viscoelastic behavior from -20°C to 50°C.

8. The use of acrylate polyols according to claim 7, wherein the polyurethane foams have a loss factor of more than 0.2, in the torsion pendulum test to DIN 53 445.

## Revendications

1. Mousse souple, viscoélastique de polyuréthane présentant un facteur de perte dans l'essai d'oscillation de torsion selon la norme DIN 53445 supérieur à 0,15, pouvant être obtenue par transformation
a) de polyisocyanates aromatiques avec
b) des composés présentant des atomes d'hydrogène réactifs par rapport aux isocyanates, comprenant les composants
b1) des acrylate-polyols présentant un poids moléculaire numérique moyen de 1500 à 15 000 g/mole et une fonctionnalité de 1,7 à 3 en une quantité de 10 à 60% en poids, par rapport au poids total du composant b),
b2) des polyétherpolyols présentant un poids moléculaire numérique moyen de 2500 à 8000 g/mole en une quantité de 20 à 60% en poids, par rapport au poids total du composant b), où la proportion de polyétherpolyols riches en oxyde d'éthylène est inférieure à 35% en poids, par rapport au poids total du composant b2), et
b3) des polyols présentant un poids moléculaire numérique moyen de 400 à 2499 g/mole en une quantité de 1 à 35% en poids, par rapport au poids total du composant b).

2. Mousse de polyuréthane selon la revendication 1, **caractérisée en ce que** le composant b) comprend en outre le composant
b4) des acrylate-polyols comme polyols de réticulation présentant une fonctionnalité d'au moins 4 en une quantité de 0,1 à 5% en poids, par rapport au poids total du composant b).

3. Mousse de polyuréthane selon la revendication 1 ou 2, **caractérisée en ce que** le composant b) comprend en outre le composant
b5) des agents d'allongement de chaîne en une quantité de 0,1 à 8% en poids, par rapport au poids total du composant b).

4. Mousse de polyuréthane selon l'une quelconque des revendications 1 à 3, **caractérisée en ce qu'**il s'agit d'une mousse souple moulée et **en ce qu'**il s'agit, pour les groupes OH des acrylate-polyols b1), principalement de groupes OH primaires.

5. Mousse de polyuréthane selon l'une quelconque des revendications 1 à 3, **caractérisée en ce qu'**il s'agit d'une mousse souple à blocs et **en ce qu'**il s'agit, pour les groupes OH des acrylate-polyols b1), principalement de groupes OH secondaires.

6. Procédé pour la production d'une mousse souple, viscoélastique de polyuréthane présentant un facteur de perte dans l'essai d'oscillation de torsion selon la norme DIN 53445 supérieur à 0,15, par transformation
a) de polyisocyanates aromatiques avec
b) des composés présentant des atomes d'hydrogène réactifs par rapport aux isocyanates, comprenant les composants
b1) des acrylate-polyols présentant un poids moléculaire numérique moyen de 1500 à 15 000 g/mole et une fonctionnalité de 1,7 à 3 en une quantité de 10 à 60% en poids, par rapport au poids total du composant b),
b2) des polyétherpolyols présentant un poids moléculaire numérique moyen de 2500 à 8000 g/mole en une quantité de 20 à 60% en poids, par rapport au poids total du composant b), où la proportion de polyétherpolyols riches en oxyde d'éthylène est inférieure à 35% en poids, par rapport au poids total du composant b2), et
b3) des polyols présentant un poids moléculaire numérique moyen de 400 à 2499 en une quantité de 1 à 35% en poids, par rapport au poids total du composant b).

7. Utilisation d'acrylate-polyols pour la préparation de mousses souples viscoélastiques de polyuréthane à base de polyisocyanates aromatiques, **caractérisée en ce que** la mousse de polyuréthane présente un comportement viscoélastique de -20°C à 50°C.

8. Utilisation d'acrylate-polyols selon la revendication 7, **caractérisée en ce que** les mousses de polyuréthane présentent un facteur de perte de plus de 0,2, dans l'essai d'oscillation de torsion selon la norme DIN 53 445.
